# EUROPEAN PATENT APPLICATION

(11) **EP 4 586 056 A1**
(43) Date of publication of application: **16.07.2025**
(21) Application number: 24305072.1
(22) Date of filing: 11.01.2024
(51) Int. Cl.: G06F 3/01, B64C 13/04, B64C 13/50, B64D 31/04, B64D 31/14

(54) **AIRCRAFT FLIGHT CONTROLS**

(71) Applicant: Ratier-Figeac SAS, 46101 Figeac Cedex (FR)
(72) Inventor: PICARD, Pierre-Alex, 46101 Figeac (FR); LABRY, Pierre-Jacques, 46101 Figeac (FR)
(74) Representative: Dehns

(57) **Abstract**

An aircraft flight control apparatus (200) is provided which comprises a control input device (202) comprising a moveable control input component (210) and a feeling feedback apparatus (212). A processing apparatus (204) is arranged to use user information to determine a control input profile (300) and generate at least one aircraft control signal and/or control the feeling feedback apparatus to apply force to the control input component. The processing apparatus is arranged to generate the at least one aircraft control signal and/or control the feeling feedback apparatus based at least partially on the control input profile.

## Description

### Technical Field

The present disclosure relates to aircraft flight controls.

### Background

In many aircraft, the pilot's flight controls (e.g. control stick, rudder pedals) are directly mechanically connected by rods, cables and/or hydraulic systems to their corresponding control surfaces (e.g. ailerons, elevators, rudder). The feel of the flight control, such as the level of resistance to inputs or self-centring behaviour is thus directly linked to the position of the corresponding control surface and the circumstances of the flight (e.g. airspeed). For instance, a pilot may feel more resistance to input movements as the aerodynamic load on the corresponding control surface increases (e.g. as it moves further out-of-line with the prevailing airstream and/or as the airspeed increases), and vice-versa. This can provide useful feedback to the pilot on how the aircraft is performing.

Alternatively, some aircraft have fly-by-wire (FBW) control systems, in which the flight controls are not directly connected to control surfaces. Instead, the flight controls provide electrical inputs to a flight control computer, which interprets the inputs and moves the necessary control surfaces as required. FBW systems can improve aircraft control because a pilot's inputs can be refined by computer calculations, e.g. allowing for smoother and/or more efficient flight. However, because FBW flight controls are not directly connected to their control surfaces they do not inherently provide the same feel as non-FBW flight controls.

In many FBW systems, mechanical components such as springs, dampers and friction elements are incorporated into the flight controls to recreate passively a similar feel to non-FBW flight controls. However, these passive systems do not provide any feedback to the pilot on actual aircraft behaviour. More recently, therefore, active technology has been developed for some high-performance aircraft, in which electric actuators provide dynamic force-feedback to flight controls.

However, the applicant has recognised that further improvements in active flight control technology may be desired.

### Summary

According to a first aspect of the present disclosure there is provided an aircraft flight control apparatus comprising:
a control input device comprising a moveable control input component arranged to generate one or more electrical input signals based on movement of said control input component and a feeling feedback apparatus arranged to apply force to the control input component;
an input interface for receiving user information of a user of the flight control apparatus; and
a processing apparatus arranged to:
   receive user information via the input interface, and use said user information to determine a control input profile;
   receive one or more electrical input signals from the control component and generate at least one aircraft control signal based on said one or more electrical input signals; and/or
   control the feeling feedback apparatus to apply force to the control input component;
   wherein the processing apparatus is arranged to generate the at least one aircraft control signal and/or control the feeling feedback apparatus based at least partially on the control input profile.

Thus, it will be recognised by those skilled in the art that, because the feeling feedback and/or the aircraft control signal(s) are based at least partially on the user's control input profile, examples of the present disclosure can allow a user of an aircraft flight control apparatus (e.g. an aircraft pilot) to adapt the "feel" of the control input component to their own personal requirements. This may improve user familiarity and comfort, aiding control and/or reducing user fatigue.

For instance, the user-specific control input profile can allow a stronger user to have their movements resisted by stronger forces, to avoid inadvertently providing excessively large inputs. Conversely, a weaker user may prefer lower feedback forces to avoid becoming fatigued. Similarly, a shorter user may program their control input profile so that a given movement of a control input component (e.g. a rudder pedal) causes the processing apparatus to generate the same aircraft control signal as a taller user making a larger movement. As will be explained below in more detail, the control input profile may include information relating to one or more of the following group: a neutral position of the control input component, a stroke of the control input component, a spring constant of a restoring force, a frictional force, a breakout force, a damping coefficient. The feeling feedback apparatus may be a force feedback apparatus.

The feeling of the aircraft flight control apparatus may be customised by each user that uses it, i.e., by following a new control input profile for each user. For instance, a shorter pilot may have a different control input profile to a taller pilot, to indicate a preference for a smaller stroke and/or lower feedback force. In other words, the aircraft flight control apparatus may be further arranged to:
receive second user information via the input interface, and use said second user information to determine a second control input profile that is different to the (first) control input profile;
wherein the processing apparatus is arranged to generate the at least one aircraft control signal and/or control the feeling feedback apparatus based at least partially on the second control input profile.

The second user information may be information of a second pilot who uses the aircraft flight control apparatus during the same flight or on a subsequent flight to the first user. The first user information may, for instance, be for all pilots of a first airline and the second be user information may be for all pilots of a second airline (i.e. with the control input profile containing company-specific preferences).

Modern aircraft contain various different types of control input device that are operated by a user moving an input component. The control input component is preferably operable to produce different electrical input signals based on different movements. For instance, different electrical input signals may be generated by moving the control input component in different directions, by different amounts, and/or with different speeds. In a set of examples, the control input component comprises a rudder pedal (e.g. of a rudder and brake pedal unit (RBPU)), a yoke (i.e. of a control column unit), a control stick (e.g. of a centre stick or a side stick unit) or a thrust lever (e.g. a throttle quadrant actuator). The electrical input signal(s) may indicate an absolute or relative position of the control input component (e.g. the electrical input signal(s) may be output by a position encoder). The electrical input signal(s) may be analogue or digital signals.

Most aircraft are primarily controlled in flight by the movement of aerodynamic control surfaces (e.g. elevators, ailerons, rudders). These may be moved by electric and/or hydraulic control surface actuators. The electrical input signal(s) generated by the control input device may simply be sent directly to one or more such actuators. However, in a set of examples the aircraft flight control apparatus is a fly-by-wire system in which the processing apparatus generates at least one aircraft control signal based on said one or more electrical input signal (i.e. in which the processing apparatus interprets user inputs and generates an appropriate control signal). In some such examples, at least one of the aircraft control signal(s) generated by the processing apparatus is for actuating one or more aerodynamic control surfaces. For instance, the processing apparatus may be arranged to send aircraft control signal(s) to one or more control surface actuators.

The flight control apparatus may comprise one or more aircraft control surface devices(e.g. comprising a control surface and a corresponding actuator). The one or more aircraft control surface devices may be controlled by the electrical input signals and/or the aircraft control signal(s). The electrical input signals and/or the aircraft control signal(s) may be analogue or digital signals.

It will be appreciated that some aircraft manoeuvres indicated by a single movement of the control input component (e.g. a roll to the left) can involve several different control actions (e.g. the movement of several control surfaces such as left and right ailerons moving in opposite directions). Thus, in some examples a single movement of the control input may cause the processing apparatus to generate and send multiple control signals (e.g. to different control surfaces).

Some aircraft manoeuvres may also (or instead) involve appropriate changes to engine thrust levels. As such, additionally or alternatively, at least one of the aircraft control signal(s) generated by the processing apparatus may be for controlling engine thrust. The processing apparatus may be arranged to send one or more of the aircraft control signal(s) to an engine control system. The flight control apparatus may comprise the engine control system.

Because the feeling feedback apparatus is controlled by the processing apparatus, it can provide active feedback that is tailored to the user. This may be more useful than passive feedback provided in some existing systems (e.g. by a physical spring-damper arrangement). The feeling feedback apparatus may comprise one or more electric actuators (e.g. electric motors, solenoids, etc) arranged to apply force to the control input component or cause force to be applied to the control input component. The feeling feedback apparatus may comprise one or more sensors arranged to sense a position and/or movement of the control input component (e.g. one or more rotary and/or linear encoders).

Many aircraft control input components have a neutral position (e.g. a centre position for a yoke or control stick). The feeling feedback apparatus may be arranged to apply a restoring force that urges the control input component towards the neutral position.

The restoring force may have a constant magnitude, i.e. always urging the control input component towards the neutral position with the same force. However, in some examples the restoring force may vary depending on a position of the control input component.

For instance, the restoring force may be a function of a displacement of the control input component relative to the neutral position (e.g. a distance from the neutral position). Some control input components may be movable from the neutral position in more than one direction, in which case the restoring force may vary depending on a direction of the displacement (e.g. in addition to or alternatively to a distance). Some aircraft controls (e.g. rudder pedals) move linearly, in which case a displacement relative to the neutral position may be measured in metres. Other controls (e.g. a control stick) may rotate about a fulcrum, in which case the displacement may be an angular displacement from a neutral position.

For at least some displacement ranges, the restoring force may be proportional to the distance from the neutral position (i.e., the restoring force may be a linear spring restoring force (that follows Hooke's law) for at least some displacements). This may replicate a passive force feedback system that uses a physical spring to restore a control input component to a natural position. However, advantageously the feeling feedback apparatus can implement more complex restoring force profiles and so, in a set of examples, the restoring force does not follow Hooke's law for at least some displacements relative to the neutral position (e.g. for one or more distance ranges). For instance, the restoring force may have a different spring rate or spring constant at different displacements, to provide non-linear force feedback.

Additionally or alternatively, the feeling feedback apparatus may be arranged to apply a resistive force that resists movements of the control input component (i.e. that acts in a direction opposite to the movement of the control input component). Depending on the movement, the resistive force may act in the same or a different direction to a restoring force. The resistive force may resist user movements of the control input component and/or movements of the control input component that are not caused by the user (e.g. a movement of the control input component towards the neutral position caused by the restoring force).

The resistive force may have a component with a constant magnitude, i.e. always resisting movement of the control input component with the same force. This may replicate a constant friction force on the control input component.

Additionally or alternatively, the resistive force may vary depending on a position and/or movement of the control input component. In a set of examples, the resistive force is a function of speed of movement of the control input component. In other words, the resistive force may comprise a damping component (i.e. replicating a passive force feedback system with a physical damper).

The resistive force may, in general, be larger for larger movement speeds. A speed-dependent resistive force that resists faster movements of the control input component more strongly than slower inputs may advantageously discourage sudden control inputs and mitigate oscillations (e.g. when a control input component is released and subject to a restoring force).

In some examples, additionally or alternatively, the resistive force may be a function of a displacement of the control input component relative to a neutral position.

In some examples, the feeling feedback apparatus may be arranged to apply a breakout force to the control input component that must be overcome by a user before the control input component can be moved at all. This may be implemented by the feeling feedback apparatus applying a non-zero restoring force when the control input component is at a neutral position. Additionally or alternatively, the breakout force may be implemented with a frictional resistive force (i.e. a resistive force at zero or near-zero speeds). In some examples, the breakout force is the sum of a zero-displacement restoring force and a zero-speed resistive force.

Because the force feedback is actively controlled, other factors may also (or instead) advantageously be taken into account by the processing apparatus when controlling the feeling feedback apparatus. In a set of examples, the processing apparatus is arranged to control the feeling feedback apparatus based on a state of the aircraft (e.g. position, airspeed, groundspeed, altitude, attitude). This may usefully enable the control input component itself to provide the pilot with haptic feedback on the aircraft's performance. In a set of examples, the processing apparatus is arranged to control the feeling feedback apparatus based on an airspeed of the aircraft. Additionally or alternatively, the processing apparatus may be arranged to control the feeling feedback apparatus based on a position (e.g. altitude) of the aircraft. Additionally or alternatively, the processing apparatus may be arranged to control the feeling feedback apparatus based on an attitude of the aircraft.

For instance, the feeling feedback apparatus may be controlled to apply a greater restoring force to the control input component when the aircraft has a higher airspeed (e.g. to replicate the sensation of a control input component that is mechanically connected to control surfaces experiencing increased aerodynamic loads). The feeling feedback apparatus may be controlled to apply a lower restoring force to the control input component at higher altitudes, e.g. to replicate the lower aerodynamic loads in thinner air.

The processing apparatus may be arranged to apply a modifier (e.g. a multiplier) to an intended feedback force that is a function of a state of the aircraft. The aircraft flight control apparatus may measure the state of the aircraft (e.g. airspeed) itself, or it may be arranged to receive aircraft state information from a separate source (e.g. from an avionics or navigation system).

In a set of examples, the force that the feeling feedback apparatus applies to the control input component is based at least partially on the control input profile. For instance, the control input profile may specify one or more parameters of a restoring force and/or a resistive force. This means that a user can customise how the control input component reacts to various types of movements to achieve their desired control "feel".

As mentioned above, the force that the feeling feedback apparatus applies to the control input component may follow one or more predetermined feedback force relationships. For instance, the processing arrangement may be arranged to control the feeling feedback apparatus to apply a restoring force which is proportional to a distance from a neutral position of the control input component (i.e. a restoring spring force) and/or a resistive force that opposes all movements of the control input component (i.e. a frictional force). In some examples, the control input profile may define a value of one or more parameters of a predetermined feedback force relationship. For instance, the control input profile may include a value of a spring constant of a linear spring restoring force (i.e. the constant of proportionality), and/or a value of a constant magnitude component of a resistive force (i.e. a frictional force). The control input profile may define a maximum value of the restoring force (e.g. to applied when the control input component is at a maximum displacement).

In some examples, the control input profile may include one or more other parameters relating to a predetermined force relationship. For instance, the control input profile may include a value of a breakout force (i.e. comprising a zero-displacement restoring force and/or a zero-speed resistive force) or a damping coefficient (e.g. a constant of proportionality of a linear speed-dependent resistive force).

The control input profile setting values for one or more parameters of a predetermined force relationship may allow a user to usefully customise the force-feedback behaviour of the control input device using a relatively simple set-up process. Moreover, aircraft control systems are typically subject to strict regulatory approval processes which may be better suited to defining allowable ranges of one or more specific parameters than an entirely free choice over force-feedback rules.

However, in some examples the processing apparatus may be used to employ more complex feeling feedback rules. For instance, the processing apparatus may be arranged to apply a force to the control input component according to a relationship that cannot be approximated by a spring and/or damper and/or friction model for at least some displacements and/or speeds of movement of the control input component. In some examples, the control input profile may simply define directly forces that the feeling feedback apparatus should apply in one or more situations. For instance, the control input profile may comprise one or more look-up tables linking control input component displacements and/or movement speeds with forces that should be applied to the control input component. For instance, the control input profile may comprise a look-up table that links various distances of the control input component from a neutral position with corresponding magnitudes of a restoring force towards the neutral position. Additionally or alternatively, the control input profile may comprise a look-up table that links various magnitudes of movement speed of the control input component with corresponding magnitudes of a resistive force opposing said movement. This may allow a user to specify more exactly a desired feedback force behaviour.

In relevant examples, the control input profile may also (or instead) be used to customise whether or how a force applied by the feeling feedback apparatus is based on a state of the aircraft (e.g. airspeed). For instance, the control input profile may indicate how a force applied by the feeling feedback apparatus should change based said state of the aircraft. In a set of examples, the control input profile includes an airspeed sensitivity value which indicates how sensitive the force applied by the feedback apparatus should be to changes in airspeed. For instance, the airspeed sensitivity value may partially or entirely define an airspeed-dependent modifier (e.g. a multiplier) that the processing apparatus is arranged to apply an intended feedback force.

In a set of examples, additionally or alternatively, the processing apparatus is arranged to generate the at least one aircraft control signal based at least partially on the control input profile. In other words, the processing apparatus may be arranged to interpret movements of the control input component according to the control input profile. This may involve the electrical input signal(s) generated by the control input component being converted into the aircraft control signal(s) according to a relationship that depends on the control input profile.

The control input profile may indicate partially or completely how user movements of the control input component should relate to control signals for controlling the aircraft. This may allow the control of the aircraft to be optimised to a user's physical characteristics (e.g. height, arm length) and preferences, aiding comfort, mitigating fatigue and/or improving control dexterity.

In some examples, the control input profile may include one or more parameters relating to a predetermined relationship between the electrical input signal(s) and aircraft control signal(s) (e.g. a relationship between an electrical input signal indicating the position of a control input component such as a rudder pedal and an aircraft control signal controlling the corresponding position of the aircraft rudder). For instance, the control input profile may indicate one or more coefficients of a mathematical relationship between the electrical input signal(s) and aircraft control signal(s), e.g. a linear relationship defined by minimum value(s), maximum value(s), intercept value(s) and/or a gradient. The mathematical relationship may also be non-linear (e.g. an exponential or polynomial relationship).

In a set of examples, the control input profile defines a stroke of the control input component, e.g.,. a range of motion of the control input component between positions corresponding to minimum and maximum aircraft control inputs.

In other words, the control input profile may set how far a user must move the control input component to achieve its minimum and/or maximum control input. This may helpfully allow the aircraft flight control apparatus to be tailored to users with different movement abilities. For instance, a short user may reduce a stroke of a leg-operated rudder pedal compared to that for a taller user, to allow them to access more comfortably a complete range of rudder positions. The stroke may be defined by a distance (e.g. for a linearly-actuated control input component) or by an angle (e.g. for a rotatable control input component).

For components having a neutral position, the stroke may be a range of motion between the neutral position and position corresponding to a minimum or maximum input (i.e. a positive displacement from the neutral position required to obtain a maximum output or a negative displacement from the neutral position required to obtain a minimum aircraft control input). Alternatively, the stroke may be range of motion between the minimum and maximum (i.e. a total range of displacement to move from a minimum aircraft control input to a maximum aircraft control input). The stroke of a control input component may be asymmetric about a neutral position (i.e. with a magnitude of the positive displacement from the neutral position required to obtain a maximum output being different to a magnitude of the negative displacement from the neutral position required to obtain a minimum aircraft control input). Alternatively, the stroke of a control input component is symmetric about a neutral position.

In a set of examples, the processing apparatus may be arranged to generate an aircraft control signal based on what proportion of a stroke of a control input component the control input component is moved. In other words, the processing apparatus may be arranged to scale a movement required to generate a particular aircraft control signal to a stroke specified in the control input profile (e.g. to generate a full stroke at stop whatever the input value is).

Additionally or alternatively, the control input profile may define a neutral position of the control input component, i.e. a position corresponding to a neutral control input such as a centred position of a yoke.

Additionally or alternatively, the control input profile may define one or more control movement thresholds which trigger the processing apparatus to perform one or more actions.

A control movement threshold may comprise a displacement threshold, i.e. a with the processing apparatus arranged to perform one or more actions whenever the displacement of the control input component is greater than (or, alternatively, less than) the threshold. A displacement threshold may also be referred to as a gate or hard-point displacement.

Additionally or alternatively, a control movement threshold may comprise a speed threshold, i.e. a with the processing apparatus arranged to perform one or more actions whenever the speed of the control input component is greater than (or, alternatively, less than) the threshold.

Actions that may be triggered by the control movement threshold include the sounding of one or more alarms and/or controlling the feeling feedback apparatus to apply one or more forces to the control input component (e.g. a vibrating force). The control movement threshold may be a movement of the control input component that corresponds to a magnitude of aircraft manoeuvre that nears or exceeds a comfortable and/or safe level (e.g. a manoeuvre that would exceed an acceleration comfort threshold). Actions triggered by the control movement threshold may thus serve as a warning or soft-barrier to a user that their inputs are nearing or exceeding comfortable and/or safe aircraft manoeuvring limits.

The control movement threshold may be fixed, e.g. based on known aircraft performance data. However, in some examples, the control movement threshold is based at least partially on a state of the aircraft (e.g. position, airspeed, groundspeed, attitude, altitude) of the aircraft. For instance, the control movement threshold may depend on a comfortable and/or safe aircraft manoeuvring limit taking into account the current state of the aircraft.

The processing apparatus may be used to employ more complex relationships between electrical input signal(s) and aircraft control signal(s). For instance, the processing apparatus may be arranged to generate aircraft control signal(s) in response to electrical input signal(s) according to a relationship that cannot be approximated by a linear or simple non-linear mathematical relationship (e.g. a low-order polynomial). In some examples, the control input profile may simply define directly aircraft control signal(s) that the processing apparatus should generate in response to certain electrical input signal(s). For instance, the control input profile may comprise one or more look-up tables linking electrical input signal(s) with aircraft control signal(s).

In some examples, the processing apparatus is arranged to generate the at least one aircraft control signal based at least partially on the control input profile and to control the feeling feedback apparatus based at least partially on the control input profile. In some examples this may involve simply applying user preferences for feedback force and control movement interpretation as described above separately. However, in some examples the generation of the aircraft control signal(s) and the control of the feeling feedback apparatus are linked. For instance, a control input profile may define a user's desired stroke for a control input component as well as a desired maximum restoring force value. In such examples the processing apparatus may be arranged to control the feeling feedback apparatus to apply the maximum restoring force at the maximum displacement indicated by the desired stroke. In some examples, the processing apparatus may control the feeling feedback apparatus to apply a very high force restoring force if the control input component is moved beyond a maximum displacement (i.e. to provide a "hard stop" position).

In a set of examples, the aircraft flight control apparatus comprises a plurality of control input devices comprising a control input component and an associated feeling feedback apparatus. For instance, the aircraft flight control apparatus may comprise a control stick device and a rudder pedal device. At least one, some or all of the control input devices may be arranged as described herein. The control input profile may include information for customising the behaviour of at least one, some or all of the plurality of control input components (i.e. the processing apparatus may be arranged to interpret movements of multiple control input components and/or control multiple feeling feedback apparatuses based at least partially on the control input profile).

In some examples, the aircraft flight control apparatus comprises a pair of control input devices (e.g. for aircraft that can carry two pilots). The control input devices of the pair may have control input components of the same type (e.g. two rudder pedals, yokes, control sticks, thrust levers), but this is not essential and in some examples the control input components of a pair of control input devices of a pair are different. For instance, a pair of control input devices may comprise a control stick and a yoke.

One or both of the pair of control input devices may be configured as described herein. In other words, the control input device of the aircraft flight control apparatus may comprise a first control input device of a pair of control input devices, and the aircraft flight control apparatus may also comprise:
a second control input device comprising a moveable control input component arranged to generate one or more electrical input signals based on movement of said control input component and a feeling feedback apparatus arranged to apply force to the control input component.

A pair of control input devices may be configured for use by a corresponding pair of users (e.g. first and second pilots of an aircraft). For instance, the pair of control input devices may be located on opposite sides of an aircraft cockpit.

In a set of examples, the processing apparatus is arranged to control the feeling feedback apparatus of one control input device of a pair to cause its control input component to mirror movements of a control input component of the other control input device of the pair. Mirroring one pilot's inputs on the other control input device may aid understanding between pilots, e.g. replicating aircraft control systems with mechanically-linked dual inputs. A pair of mirrored control input devices may accordingly comprise one device acting as a master unit (i.e. a flying unit) controlled by a pilot and the other device acting as a slave unit (i.e. a backdriven unit) which mirrors the movements of the master unit. The roles of the control input devices may be switched from time to time, e.g. as different pilots take control of the aircraft. It will be understood that the master unit (i.e. the flying unit) generally provides the actual control inputs to the aircraft during such mirroring (subject to dual input conflict protocols known in the art *per se*)*.*

As explained above, the aircraft flight control apparatus may be arranged to apply different control input profiles at different times. However, the aircraft flight control apparatus may also be arranged to apply different control input profiles at the same time (e.g. as part of the same flight). For instance, two co-pilots may have different preferences for a stroke distance and/or feedback force strength. In some examples with a pair of control input devices (e.g. for different pilots), the processing apparatus may be arranged to determine and use a different control input profile for each control input device (e.g. so that each pilot can indicate their own preferences in their control input profile).

In other words, the processing apparatus may be arranged to:
receive user information via the input interface, and use said user information to determine first and second control input profiles;
receive one or more electrical input signals from a control component of a first control input device of the pair, and generate at least one aircraft control signal based on said one or more electrical input signals, and/or control the feeling feedback apparatus of the first control input device to apply force to the control input component of the first control input device;
receive one or more electrical input signals from a control component of a second control input device of the pair, and generate at least one aircraft control signal based on said one or more electrical input signals, and/or
control the feeling feedback apparatus of the second control input device to apply force to the control input component of the second control input device;
generate the at least one aircraft control signal and/or control the feeling feedback apparatus for the first control input device based at least partially on the first control input profile; and
generate the at least one aircraft control signal and/or control the feeling feedback apparatus for the second control input device based at least partially on the second control input profile.

It will be appreciated that, in some examples with a pair of control input devices having different control input profiles, the processing apparatus is arranged to generate the same aircraft control signal in response to different movements of the respective control input components. In such examples, different pilots may configure their control input profile such that different movements of the control input components achieve the same control over the aircraft.

When one control input component is arranged to mirror movements of the other control input component of the pair, this mirroring may be based at least partially on the control input profiles, e.g. to replicate the movement that the control input component would need to make to produce the same aircraft control signal(s) as the other control input component. In other words, the processing apparatus may be arranged to control the feeling feedback apparatus of one control input device of a pair to cause its control input component to replicate a movement of said control input component associated with an aircraft control signal generated from movement of the control input component of the other control input device of the pair (i.e. to move as if the mirroring control input component was causing the same aircraft control signal(s) to be produced). In some examples, the processing apparatus is arranged to control the feeling feedback apparatus of a first control input device of the pair to cause a control input component of the first control input device to mirror movements of a control input component of the second control input device of the pair, scaled and/or offset based on the control input profiles (e.g. scaled according to different strokes specified in the control input profiles and/or offset according to different neutral positions specified in the control input profiles).

The input interface may comprise a user input device such as a keyboard, a touch screen or a voice recognition device.

The user information received via the input interface may comprise values of one or more parameters of a predetermined force relationship and/or one or more values of forces the feeling feedback apparatus should apply in one or more situations (e.g. entries in a look-up table). In other words, a user may simply manually input their preferences into the input interface to enable the processing apparatus to determine the control input profile.

Many parameters of aircraft design are tightly controlled by regulators, to ensure safety. In some examples, therefore, a user may only be permitted to select values for the control input profile within one or more predetermined ranges (e.g. ranges which have been certified by the appropriate regulator). However, the applicant has recognised that even restricted customisation can still be very useful for improving the user experience.

It may not always be convenient for a user to manually select one or more values for the control input profile. Therefore, in a set of examples, the user information may comprise one or more personal characteristics of a user (e.g. age, height) and the processing apparatus may be arranged to determine one or more parameters of the control input profile using the personal characteristic(s). For instance, the processing apparatus may be arranged to determine an optimal stroke and/or an optimal level of force feedback for a user of a particular height.

Additionally or alternatively, the user information received via the input interface may comprise information identifying a user, and the processing apparatus may be arranged to determine the control input profile by retrieving information associated with the user identified (e.g. from local memory or from a remote server). For instance, the user information may comprise a username, an ID number, or biometric identification information associated with the user. The input interface may comprise an identification device (e.g. an ID card reader, an RFID tag reader, a fingerprint reader or a camera for person recognition).

The control input profile may also be useful for storing other user preferences (or information from which other preferences can be determined). In a set of examples, the processing apparatus is arranged to adjust one or more user experience settings based on the control input profile, such as a seat position, an armrest position, a rudder pedal position, display settings and/or lighting settings.

The control input profile may be set up by a user in advance, e.g., before they enter an aircraft cockpit in which the aircraft flight control apparatus is in use. However, it may be convenient for the user to be able to adjust their preferences from time to time. In a set of examples, the processing apparatus is arranged to update the control input profile based on one or more user inputs. For instance, a user may manually update one or more values stored in the control input profile using a user input device. Additionally or alternatively, the processing apparatus may be arranged to detect direct manual changes to the control input component and/or one or more user experience settings and update the control input profile accordingly. For instance, a user may manually adjust a seat position and the processing apparatus detects and updates the control input profile to reflect this adjustment.

The aircraft flight control apparatus may have a default control input profile available (e.g. stored in a memory). The processing apparatus may, for instance, be arranged to apply the default control input profile if the user information indicates that the user does not currently have an associated control input profile. The processing apparatus may be arranged to apply the default control input profile if one or more errors or failures are detected (e.g. before or during flight, e.g. when applying a user's control input profile). Additionally or alternatively, the processing apparatus may be arranged to apply the default control input profile if no user information is provided (e.g. if a user declines to provide their information). Additionally or alternatively, the processing apparatus may be arranged to apply the default control input profile when instructed by a user. For instance, a pilot may become unhappy with their control input profile during flight and wish to revert to a default control input profile. The default control input profile may include parameter values set by the aircraft manufacturer or by an aircraft operating company. The processing apparatus may be arranged to use part of a default control input profile if a user's control input profile is incomplete.

In some examples, the processing apparatus is a single computing device such as a flight control computer or an embedded processing device integrated into a control input device (e.g. a microcontroller). However, in other examples the processing apparatus comprises multiple devices over which processing is distributed. For instance, in examples with multiple control input devices (e.g. a pair), the processing apparatus may comprise a processing device for each control input device, although additionally or alternatively the control input devices may share a common processing device. The processing apparatus may comprise a mixture of different types of processing devices. For instance the processing apparatus may comprise a flight control computer that does some processing, and one or more embedded processing devices that also do some processing.

The present disclosure extends to an aircraft comprising the aircraft flight control apparatus disclosed herein.

Features of any aspect or example described herein may, wherever appropriate, be applied to any other aspect or example described herein. Where reference is made to different examples, it should be understood that these are not necessarily distinct but may overlap.

### Detailed Description

One or more non-limiting examples will now be described, by way of example only, and with reference to the accompanying figures in which:
Figure 1 is a schematic diagram of an aircraft for use with examples of the present disclosure;
Figure 2 is a schematic diagram of an aircraft flight control apparatus according to an example of the present disclosure;
Figure 3 shows a control input profile for use with examples of the present disclosure;
Figure 4 shows example restoring force relationships;
Figure 5 shows example resisting force relationships; and
Figures 6 and 7 show example stroke relationships.

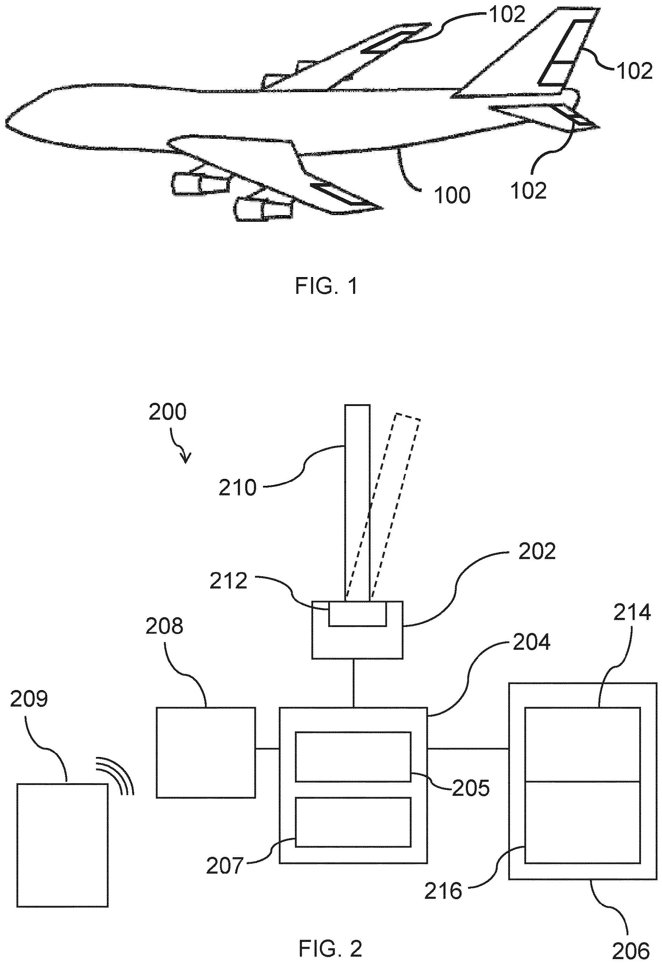

Figure 1 shows an aircraft 100 comprising a plurality of control surfaces 102 that are moved according to pilot inputs to control movement of the aircraft 100. The control surfaces 102 illustrated include an elevator, a rudder and an aileron. The aircraft 100 may comprise other control surfaces 102.

Figure 2 shows an aircraft flight control apparatus 200 comprising a flight control input device 202, a flight control computer 204, a control surface device 206 and an ID card reader 208 for reading an ID card 209. The flight control computer 204 comprises a processor 205 and a memory 207. The processor 207 executes software stored on the memory 207 which causes it to perform the steps discussed below.

The flight control input device 202 comprises a moveable control input component 210 and a feeling feedback apparatus 212. The control surface device 206 comprises an actuator 214 and a control surface 216.

The aircraft flight control apparatus 200 is used by a pilot to control the flight of an aircraft 100. The pilot moves the moveable control input component 210 to cause the control surfaces 102 to move to achieve a desired aircraft manoeuvre.

In the example illustrated in Figure 2, the flight control input device 202 is a side stick device comprising a moveable control stick 210 which can be deflected in two dimensions from a neutral position to input roll and pitch commands to the aircraft 100. The feeling feedback apparatus 212 can be controlled to apply a restoring force on the control stick 210 towards the neutral position, and a damped resistive force which resists all movements of the control stick 210. The feeling feedback apparatus 212 provides active force feedback to a user, e.g., using one or more electric motors (not shown) rather than a passive spring-damper system.

The aircraft flight control apparatus 200 is, in this example, a fly-by-wire (FBW) apparatus in which the control input component 210 is not directly mechanically or hydraulically connected to the control surfaces 102. Instead, moving the control input component 210 generates electrical input signals which are sent to the flight control computer 204. The flight control computer 204 interprets the input signals and sends control signals to the actuator 214 to move the control surface 216 accordingly. As will be explained in more detail below, the way in which the flight control computer 204 interprets the input signals depends in part upon a control input profile that is set according to pilot preferences. Similarly, details of the restoring and resisting forces applied by the feeling feedback device 210 depend in part on the control input profile of the pilot.

Only one flight control input device 202 and control surface device 206 is illustrated in Figure 2 to aid clarity, but the aircraft flight control apparatus 200 may comprise multiple control input components and/or multiple control surfaces (and/or other aircraft control devices such as an engine control system). Equally, although a control stick device 210 is illustrated here it will be recognised that the present disclosure can also be applied to other control devices, such as rudder pedals.

To establish their preferred control input profile within the aircraft flight control apparatus 200, a user presents their ID card 209 to the ID card reader 208. The ID card reader 208 receives from the ID card 209 a unique ID number associated with the user, and forwards this to the flight control computer 204.

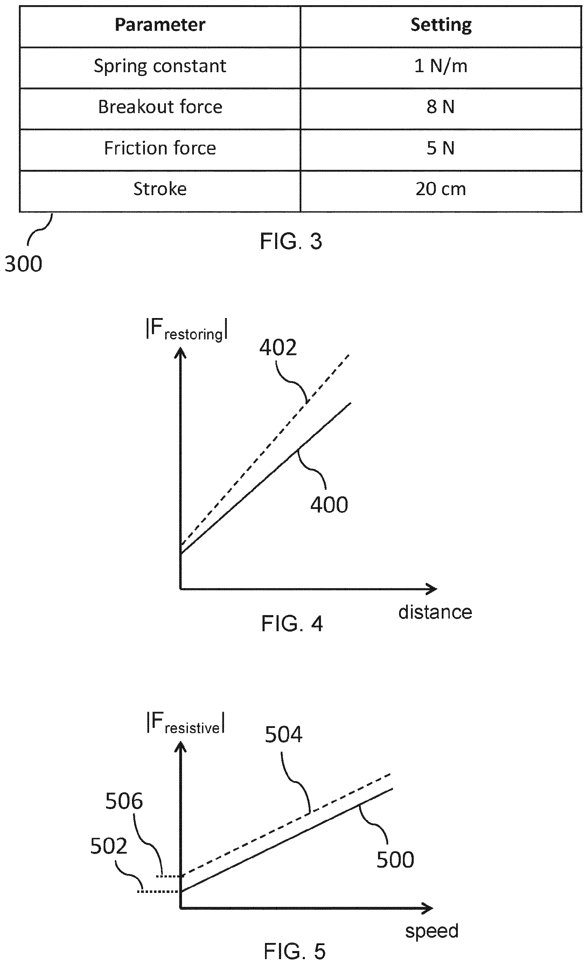

The flight control computer 204 receives the ID number and retrieves from the memory 207 a control input profile associated with that ID number (i.e., associated with the user). Figure 3 shows an example of a control input profile 300 containing various parameters related to operation of the control input device 202.

In this example, the control input profile 300 contains four parameters: spring constant (sometimes referred to as spring rate), breakout force, friction force and stroke. The values of these parameters are set in advance by the user according to their preferences. The flight control computer 204 uses these values when interpreting input signals from the control input device 202 and when controlling the feeling feedback apparatus 204 to apply feedback forces.

The stroke parameter is used by the flight control computer 204 when interpreting input signals from the control input device 202. The value of the stroke parameter sets the physical distance that the control stick 210 must be deflected to move from a minimum control input (e.g. full left roll) to a maximum control input (e.g. full right roll). Setting the stroke parameter thus allows a pilot to customise the operation of the control stick 210 to their preferred magnitude of control input movements.

The other parameters in the control input profile 300 are used by the flight control computer 204 when controlling the feeling feedback apparatus 204.

The active feedback force generated by the feeling feedback apparatus 204 is the combination of a restoring force and a resistive force. The restoring force is a function of the distance of the control stick 210 from the neutral position and urges the control stick 210 towards the neutral position. Figure 4 shows an example of how the magnitude of the restoring force 400 varies with distance for a given control input profile. The restoring force curve 400 shown in Figure 4 represents the restoring force when the aircraft is travelling at zero airspeed. The restoring force may also depend on the current airspeed of the aircraft 100, with the restoring force generally being larger for higher airspeeds to recreate artificially the feel of manual controls connected directly to control surfaces experiencing increased aerodynamic loads.

In this example, the restoring force increases linearly with increasing distance, replicating the behaviour of a spring. The gradient of this relationship is derived from the value of the "spring constant" parameter in the control input profile 300. In this example the restoring force is linear with a single spring constant but in other examples the restoring force might be non-linear (e.g. with a variable spring constant at different distances). The restoring force is non-zero at zero distance, to provide (in combination with a frictional resistive force discussed below) a breakout force that must be overcome by the user to displace the control stick 210 from the neutral position. The value of the restoring force at zero distance (i.e. the y-intercept of the graph shown in Figure 4) is thus derived from the "breakout force" and "friction force" parameters in the control input profile 300.

Figure 4 also shows a second restoring force curve 402 associated with a different control input profile of a stronger pilot. The stronger pilot prefers a stronger restoring force 402, and so sets the spring constant in their control input profile to a larger number (e.g. 1.5 N/m). It can be seen from Figure 4 that the second restoring force curve 402 for zero airspeed is higher than the first restoring force curve 400.

The active feedback force also comprises a resistive force, that is a function of a movement speed of the control stick 210 and acts to resist all movements (i.e. it acts in an opposite direction to the direction of the movement). Figure 5 shows an example of how the magnitude of the resistive force 500 varies with movement speed for the first control input profile 300. In this example, the resistive force increases linearly with increasing speed. This may help to inhibit sudden large control inputs. The resistive force 500 is non-zero at zero movement speed, i.e. there is a constant friction force 502 resisting movements at all speeds. The zero-speed resistive force (i.e. the y-intercept of Figure 5) is set by the value of the "friction force" parameter in the control input profile 300.

The second, stronger, pilot prefers a stronger resistive force 504 and so sets the friction force parameter in their control input profile to a higher value (e.g. 7 N). The second resistive force 504 shown in Figure 5 thus has a higher constant friction force 506 and is generally higher for all speeds.

Thus, as a user moves the control stick 210 to manoeuvre the aircraft, the flight control computer 204 combines a restoring force and a resistive force determined from the relationships discussed above (which are based in part on the control input profile 300 and the current airspeed of the aircraft 100) and controls the feeling feedback apparatus 214 to apply the resulting force to the control stick 210. This provides the user with feeling feedback that is optimised for their preferences and physical characteristics, improving comfort and mitigating fatigue.

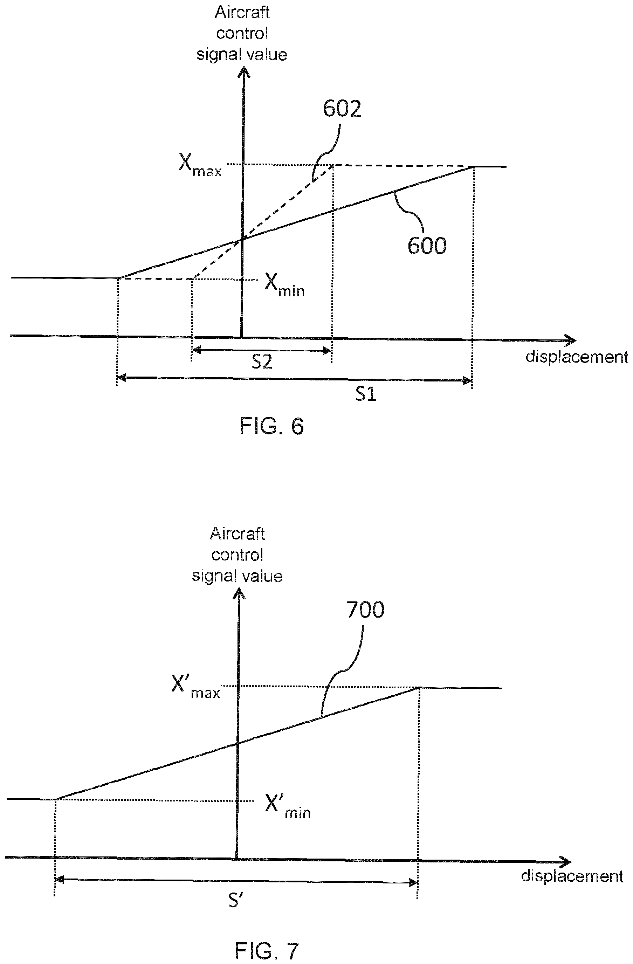

Figure 6 illustrates how the stroke of the control stick 210 can be tailored to a user's preference. A first stroke curve 600 shows how a value of an aircraft control signal (e.g. which controls aileron deflection) varies with the displacement of the control stick 210 from the neutral position. The first stroke curve 600 is relatively shallow, with a stroke S₁ between the minimum aircraft control signal value Xₘᵢₙ and a maximum aircraft control signal value Xₘₐₓ. S₁ is set by the value of the "Stroke" parameter in the control input profile 300.

Figure 6 also shows a second stroke curve 602 for a user who prefers a shorter stroke S₂. The control stick 210 can still be used to input all values of the aircraft control signal value between the minimum Xₘᵢₙ and maximum Xₘₐₓ, but the physical displacement of the control stick 210 needed to cover this range is smaller. The neutral position is the same for both users and both stroke curves 600, 602 are linear, so the same displacement of the control stick as a proportion of its maximum positive or negative displacement leads to the same value of the aircraft control signal for both users (although this is not necessarily the case in all examples).

It will be noted that for both stroke curves 600, 602, the maximum positive displacement is greater than the maximum negative displacement (i.e. the stroke is asymmetric about the neutral position). However, this may not be the case in all examples. For instance, Figure 7 illustrates another stroke curve 700 with a stroke S' between a minimum aircraft control signal value X'ₘᵢₙ and a maximum aircraft control signal value X'ₘₐₓ that is symmetric about the neutral position.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. An aircraft flight control apparatus comprising:
a control input device comprising a moveable control input component arranged to generate one or more electrical input signals based on movement of said control input component and a feeling feedback apparatus arranged to apply force to the control input component;
an input interface for receiving user information of a user of the aircraft flight control apparatus; and
a processing apparatus arranged to:
receive user information via the input interface, and use said user information to determine a control input profile;
receive one or more electrical input signals from the control component and generate at least one aircraft control signal based on said one or more electrical input signals; and/or
control the feeling feedback apparatus to apply force to the control input component;
wherein the processing apparatus is arranged to generate the at least one aircraft control signal and/or control the feeling feedback apparatus based at least partially on the control input profile.

2. The aircraft flight control apparatus of claim 1, wherein the control input profile includes information relating to one or more of the following group: a neutral position of the control input component, a stroke of the control input component, a spring constant of a restoring force, a frictional force, a breakout force, a damping coefficient.

3. The aircraft flight control apparatus of claim 1 or 2, wherein the control input profile is a first control input profile and the aircraft flight control apparatus is further arranged to:
receive second user information via the input interface, and use said second user information to determine a second control input profile that is different to the first control input profile;
wherein the processing apparatus is arranged to generate the at least one aircraft control signal and/or control the feeling feedback apparatus based at least partially on the second control input profile.

4. The aircraft flight control apparatus of any preceding claim, wherein the user information received via the input interface comprises information identifying a user, and the processing apparatus is arranged to determine the control input profile by retrieving information associated with the user identified.

5. The aircraft flight control apparatus of any preceding claim, comprising a pair of control input devices configured for use by a corresponding pair of users, wherein the processing apparatus is arranged to determine and use a different control input profile for each control input device.

6. The aircraft flight control apparatus of claim 5, wherein the processing apparatus is arranged to control the feeling feedback apparatus of a first control input device of the pair to cause a control input component of the first control input device to mirror movements of a control input component of the second control input device of the pair, scaled and/or offset based on the control input profiles.

7. The aircraft flight control apparatus of claim 5 or 6, wherein the control input devices of the pair of control input devices have control input components of the same type.

8. The aircraft flight control apparatus of any preceding claim, wherein the processing apparatus is arranged to scale a movement required to generate a particular aircraft control signal to a stroke specified in the control input profile

9. The aircraft flight control apparatus of any preceding claim, wherein the feeling feedback apparatus is arranged to apply a restoring force that urges the control input component towards a neutral position and/or a resistive force that resists movements of the control input component.

10. The aircraft flight control apparatus of any preceding claim, wherein the control input profile comprises one or more look-up tables linking control input component displacements and/or movement speeds with forces that should be applied to the control input component.

11. The aircraft flight control apparatus of any preceding claim, wherein the control input component is a rudder pedal, a control stick or a thrust lever.

12. The aircraft flight control apparatus of any preceding claim, wherein an aircraft control signal generated by the processing apparatus is for actuating one or more aerodynamic control surfaces or for controlling engine thrust.

13. The aircraft flight control apparatus of any preceding claim, wherein the control input profile defines one or more control movement thresholds which trigger the processing apparatus to perform one or more actions.

14. The aircraft flight control apparatus of any preceding claim, wherein the processing apparatus is arranged to generate the at least one aircraft control signal based at least partially on the control input profile and to control the feeling feedback apparatus based at least partially on the control input profile.

15. The aircraft flight control apparatus of any preceding claim, wherein the processing apparatus is arranged to apply a default control input profile if the user information indicates that the user does not currently have an associated control input profile and/or if one or more errors or failures are detected.

16. An aircraft comprising the aircraft flight control apparatus of any preceding claim.
